# EUROPEAN PATENT APPLICATION

(11) **EP 3 885 316 A1**
(43) Date of publication of application: **29.09.2021**
(21) Application number: 19887429.9
(22) Date of filing: 18.11.2019
(51) Int. Cl.: C01G 23/00, H01M 4/36, H01M 4/485, H01G 11/06, H01G 11/24, H01G 11/62, H01M 10/052, H01M 10/0568

(54) **METAL COMPOUND PARTICLE GROUP, ELECTRODE FOR POWER STORAGE DEVICE, POWER STORAGE DEVICE, AND METHOD FOR PRODUCING METAL COMPOUND PARTICLE GROUP**

(30) Priority: 22.11.2018 JP 2018218931
(71) Applicant: Nippon Chemi-Con Corporation, Tokyo 141-8605 (JP)
(72) Inventor: MINATO Yoshihiro, Tokyo 141-8605 (JP); ISHIMOTO Shuichi, Tokyo 141-8605 (JP); MURASHIGE Ryuta, Tokyo 141-8605 (JP); NAOI Katsuhiko, Fuchu-shi, Tokyo 183-8538 (JP); NAOI Wako, Kunitachi-shi, Tokyo 186-0002 (JP)
(74) Representative: AWA Sweden AB
(86) International application number: PCT/JP2019/045151
(87) International publication number: WO 2020/105603

(57) **Abstract**

A metal compound particle group that can suppress increase of internal resistance of power storage device, an electrode including the metal compound particle group for power storage device, and a method for producing the metal compound particle group are provided. A metal compound particle group has a 3D network structure in which metal compound particles are linked, and a coating layer C including silicon oxide is formed on a part of the metal compound particle group. The coating layer C including silicon oxide is formed on at least a part of a surface of the metal compound particle group. A gap 2 exists in the 3D network structure, and the coating layer C including silicon oxide is formed on the surface of the metal compound particle defining the gap 2. The coating layer C including silicon oxide is an amorphous silicon oxide.

## Description

### FIELD OF INVENTION

The present disclosure relates to a metal compound particle group, an electrode for power storage device, a power storage device, and a method for producing metal compound particle group.

### BACKGROUND

In recent years, digital camera, smartphone, and portable PC have rapidly spread, and development of secondary battery has become active. Secondary battery is expected to be applied for motive power of car and for power storage in smart grid which are aware of increase in cost and environmental load.

Electrode of the secondary battery includes positive electrode and negative electrode containing active material which reversibly occlude and release lithium ion, and electrolytic solution in which lithium salt is dissolved. In the lithium secondary battery, lithium ion is released from positive electrode and is occluded in negative electrode by charging and discharging, and lithium ion is released from negative electrode and is occluded positive electrode by discharging. The lithium-ion secondary battery has an advantage that it can work at high voltage and it has large energy density.

Furthermore, so-called hybrid capacitor is suggested to utilize advantages of both lithium-ion secondary battery and electric double-layer capacitor. The hybrid capacitor includes polarizable electrode having electric double-layer capacity as a positive electrode and metal compound particle that can occlude and release lithium ion as a negative electrode, and thus has both advantages of lithium-ion secondary battery and electric double-layer capacitor. That is, the hybrid capacitor has high energy density and high input-output characteristic.

### PRIOR ART DOCUMENT

### PATENT DOCUMENT

Patent Document 1: Japanese Laid-Open Publication JP2015-189608

### SUMMARY OF INVENTION

### PROBLEMS TO BE SOLVED BY INVENTION

When metal compound particle used as electrode material in power storage device is used as negative electrode material, deposit may be produced on negative electrode by charging and discharging. The deposit is different from film called SEI and causes increase of internal resistance at the time the deposit is produced.

Accordingly, an objective of the present disclosure is to provide a metal compound particle group that can suppress increase of internal resistance of power storage device, an electrode including the metal compound particle group for power storage device, and a method for producing the metal compound particle group.

### MEANS TO SOLVE THE PROBLEM

To achieve above objective, a metal compound particle group according to the present embodiment includes the following configuration.
(1) A metal compound particle group having a 3D network structure in which metal compound particles are linked, in which a coating layer including silicon oxide is formed on a part of the metal compound particle group.
(2) The coating layer including silicon oxide may be formed on at least a part of a surface of the metal compound particle group.
(3) Si element may be included in an amount of 0.4 wt% or more and 3.0 wt% or less relative to all metal compound particle group.
(4) A gap may exist in the 3D network structure, and the coating layer including silicon oxide may be formed on the surface of the metal compound particle defining the gap.
(5) The coating layer including silicon oxide may be an amorphous silicon oxide.
(6) A pore volume change rate calculated from a pore distribution of the metal compound particle group measured by a nitrogen gas adsorption measurement method may be more than 0.008 dV_{p/}drₚ relative to the pore diameter of 10 nm or less.
(7) A reduction rate of an integrated intensity may be 25% or more relative to the metal compound particle group on which the coating layer including silicon oxide is not formed.
(8) The metal compound particle may be lithium titanate.

An electrode for a power storge device may include the metal compound particle group. The power storage device may include an element which includes a negative electrode that is the electrode for the power storge device, and a positive electrode, and an electrolytic solution impregnated in the element, in which the electrolytic solution may include a fluorine-containing compound.

Furthermore, a method for producing the metal compound particle group of the present embodiment includes a mixing process of mixing the metal compound particle group that is a basis and a source material of silicon oxide, and a heating process of heating a powder obtained by the mixing process at a temperature of 300 °C to 600 °C.

The source material of silicon oxide may be mixed in a ratio of 1 wt% to 20 wt% relative to a weight of the metal compound particle group that is the basis.

The source material of silicon oxide may be mixed in a ratio of 3 wt% to 20 wt% relative to a weight of the metal compound particle group that is the basis.

In the mixing process, one type or two types or more alkaline compound may be mixed. Or, before the mixing process, a pre-processing process of pre-processing the metal compound particle group that is the basis with alkaline compound. As the alkaline compound, hydroxide, acetate, sulfate, carbonate, nitrate, and chloride of alkali metal or alkali earth metal, and inorganic alkaline agent or organic alkaline agent may be cited.

### EFFECT OF INVENTION

According to the present disclosure, a metal compound particle group that can suppress increase of internal resistance of power storage device, an electrode including the metal compound particle group for power storage device, and a method for producing the metal compound particle group can be provided.

### BRIEF DESCRIPTION OF DRAWINGS

Fig. 1 is a schematic diagram illustrating a metal compound particle group according to the present embodiment.
Fig. 2 is a SEM image of a lithium titanate particle group of a comparative example, in which magnification thereof is 50.0 K.
Figs. 3 are SEM images (× 50.0 K) of the lithium titanate particle group, in which Fig. 3(a) is a SEM image of the lithium titanate particle group in a comparative example and Fig. 3(b) is a SEM image of the lithium titanate particle group in an example.
Figs. 4 are SEM images and graphs describing results of element analysis of the lithium titanate particle group, in which Fig. 4(a) is a result of the lithium titanate particle group in the comparative example and Fig. 4(b) is a result of the lithium titanate particle group in the example.
Fig. 5 is a graph indicating a pore diameter distribution of the lithium titanate particle group in the comparative example.
Fig. 6 is a graph indicating the pore diameter distribution of the lithium titanate particle group in the comparative example and the example.
Fig. 7 is a graph indicating a result of measuring an initial internal resistance of a lithium-ion secondary battery in which lithium titanate particle group of the comparative example and the example produced by using silane coupling agent having acryloyl group is included in active layer material of the negative electrode.
Fig. 8 is a graph indicating a result of measuring a increase rate of the initial internal resistance of a lithium-ion secondary battery after 2000 cycles, in which lithium titanate particle group of the comparative example and the example produced by using silane coupling agent having acryloyl group is included in active layer material of the negative electrode.
Fig. 9 is a graph indicating a result of measuring an initial internal resistance of a lithium-ion secondary battery in which lithium titanate particle group of the comparative example and the example produced by using silane coupling agent having epoxy group and comparative example is included in active layer material of the negative electrode.
Fig. 10 is a graph indicating a result of measuring a increase rate of the initial internal resistance of a lithium-ion secondary battery after 2000 cycles, in which lithium titanate particle group of the comparative example and the example produced by using silane coupling agent having epoxy group and comparative example is included in active layer material of the negative electrode.
Fig. 11 is a graph indicating a result of measuring an initial internal resistance of a lithium-ion secondary battery in which lithium titanate particle group of the comparative example and the example produced by using silane coupling agent having alkaline compound and comparative example is included in active layer material of the negative electrode.
Fig. 12 is a graph indicating a result of measuring a increase rate of the initial internal resistance of a lithium-ion secondary battery after 2000 cycles, in which lithium titanate particle group of the comparative example and the example produced by using silane coupling agent having alkaline compound and comparative example is included in active layer material of the negative electrode.
Fig. 13 is a graph indicating a result of thermogravimetric analysis of the lithium titanate particle group in the comparative example, in which (a) is a graph of a result of the thermogravimetric analysis and (b) is a calibration curve to calculate the amount of silane coupling agent from a loss amount.
Fig. 14 is a graph indicating a relationship between an addition amount of the silane coupling amount and an amount of Si element included in the lithium titanate particle group.
Fig. 15 is a graph indicating a result of the element analysis of the lithium titanate particle group in the example, in which (a) is a graph indicating a carbon concentration, (b) is a graph indicating a silicon concentration, and (c) is a graph indicating a ratio of carbon/silicon.
Fig. 16 is a graph indicating a result of X-ray photoelectron spectroscopy of the lithium titanate particle group before and after the heat processing.
Fig. 17 is a graph indicating a result of X-ray diffraction analysis of the lithium titanate particle group after the heat processing.
Fig. 18 is a diagram illustrating a result of measuring solid ¹H-NMR of the lithium titanate particle group in the comparative example and the example, in which (a) is a measurement data of the solid ¹H-NMR and (b) is a graph indicating a calculation result of an integral intensity.
Fig. 19 is a graph indicating a result of measuring an increase rate of the initial internal resistance of a lithium-ion secondary battery produced by using the lithium titanate particle group of the comparative example and the example after 2000 cycles.

### DESCRIPTION OF EMBODIMENTS

In below, embodiments of the present disclosure will be described. Note that the present disclosure is not limited to the embodiments described below.

### [1. Configuration]

A metal compound particle group is mainly used for electrode of power storage device. Metal compound particles configuring the metal compound particle group are materials operable as a positive electrode active material or negative electrode active material of the power storage device such as lithium-ion secondary battery and lithium-ion capacitor. The metal compound particle group has a 3D network structure in which nano-size metal compound particles are linked, and in which a coating layer including silicon oxide (SiOₓ or SiOₓ(OH)₄₋₂ₓ (X is 0 to 2)) is formed on a part of the metal compound particle group. The coating layer including silicon oxide is formed on at least a part of a surface of the metal compound particle. Furthermore, a gap exists in the 3D network structure, and the coating layer including silicon oxide is formed on the surface of the metal compound particle defining the gap.

### (Metal Compound Particle Group)

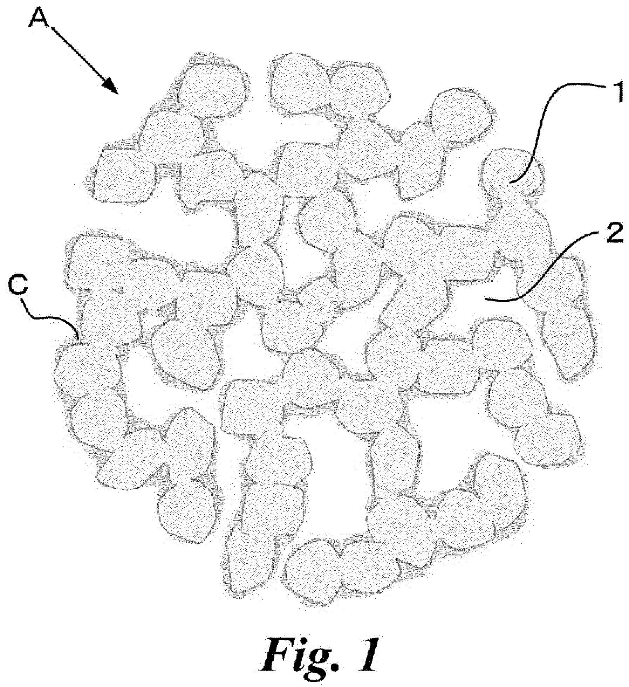

As illustrated in Fig. 1, the metal compound particle group A has the 3D network structure. The 3D network structure is a structure in which nano-size primary particles 1 of metal compound are bonded and linked in a mesh and in which a nano-size gap 2 exist therein. There is no grain boundary at the bonded interface of the primary particles 1, and there are many micropores between the primary particles. In the metal compound particle group A, the 3D network structure forms an electron path of negative electrode active material and the gap 2 becomes a storage area of an electrolytic solution, and it is considered that the pores between primary particles 1 becomes a path for ions.

The metal compound particle is a particle that can occlude and release lithium ions. As the metal compound particle, oxides such as FeO, Fe₂O₃, Fe₃O₄, MnO, MnO₂, Mn₂O₃, Mn₃O₄, CoO, CO₃O₄, NiO, Ni₂O₃, TiO, TiO₂, TiO₂(B), TiNb₂O₇, Nb₂O₅, CuO, SnO, SnO₂, SiO₂, RuO₂, WO, WO₂, WO₃, MoO₃, and ZnO, metals such as Sn, Si, Al, and Zn, composite oxides such as LiVO₂, Li₃VO₄, Li₄Ti₅O₁₂, Sc₂TiO₅, Fe₂TiO₅, Li₂Na₂Ti₆O₁₄, Li₂BaTi₆O₁₄, and Li₂SrTi₆O₁₄, nitrides such as Li_{2.6}Co_{0.4}N, Ge₃N₄, Zn₃N₂, and Cu₃N, and sulfides such as Y₂Ti₂O₅S₂ and MoS₂ may be cited.

Particularly, oxides or oxoate salts including lithium among the metal compound particles will be described in detail. The oxides or oxoate salts including lithium is represented by Li_{α}M_{β}Y_{γ}. For example, in the case of metal oxides, M is one of Co, Ni, Mn, To, Si, Sn, Al, Zn, Mg, Nb, and V, and Y is O. In the case of metal oxoate salts, M is one of Fe, Mn, V, Co, and Ni, and Y is one of PO₄, SiO₄, BO₃, and P₂O₇. M_{β} may be an alloy of M_{δ}M'_{ε}, and for example, M may be one of Sn, Sn, and Si and M' is one of Fe, Co, Mn, V, Ti, and Ni. For example, lithium iron phosphate, lithium titanate, lithium cobalt oxide, lithium vanadium phosphate, and lithium manganese iron phosphate may be used. Among them, lithium titanate (Li₄Ti₅O₁₂) is preferable.

The gap rate at the cross section of the 3D network structure is preferably 7% to 50% range. If the gap rate is less than 7%, the area contacting the electrolytic solution becomes small and affects the transfer of ions in the electrolytic capacitor. Furthermore, if the gap rate exceeds 50%, bonding between the primary particles 1 becomes coarse such that the 3D network structure may not be formed.

An average diameter of the primary particles 1 is 5 to 300 nm. The calculation method for the average diameter is as follows. Firstly, the primary particles 1 are observed using scanning electron microscope and images an image in which at least 150 primary particles 1 are included. Major axis and minor axis of the ellipse image of the primary particles 1 included in one imaged view (image) are measured, and an average value of the major axis and minor axis is calculated for each primary particle 1. Then, the average values of each primary particle 1 are added, and the added value is divided by the number of measured primary particles 1. The result would be in the range of 5 to 300 nm.

When the primary particles 1 in the range of 5 to 300 nm are bonded to form 3D network structure, the metal compound particles acquire many nano-size pores. By this, the area of the metal compound particles contacting the electrolytic solution increases, and the transfer of ions in the electrolytic capacitor becomes smooth. Furthermore, there are many micropores among the pores of metal compound particles. In particular, there is a number of micropores that is 40 nm or less.

A difference pore volume of the metal compound particles having 3D network structure is calculated from a pore distribution measured by nitrogen gas adsorption measurement method. As a result, the difference pore volume in the pore diameter of 10 to 40 nm was 0.01 cm³/g or more, and in particular, a value of 0.02 cm³/g or more was largely obtained. Therefore, the discharge rate characteristic when the metal compound particles are used for the negative electrode is improved more the area contacting the electrolytic solution increases.

### (Coating Layer)

The coating layer C is formed on the part of the metal compound particle group A. In particular, it is preferable that the coating layer C is formed on the surface of the metal compound particles. The coating layer C is a layer including silicon oxide. The coating layer C may be formed on the surface of the metal compound particles defining the gap 2 of the metal compound particle group A. That is, the coating layer C may be formed on the surface of the metal compound particles at the gap 2 in the inner structure of the metal compound particle group A, in addition to the outer circumferential surface-side of the metal compound particle group A. However, the coating layer C is not formed as much as to cover the entire gap 2, and the gap 2 remains in the metal compound particle group A on which the coating layer C is formed. The metal compound particle group A has a pore volume change rate of more than 0.008 dV_{p/}drₚ relative to the pore diameter of 10 nm or less. Furthermore, the metal compound particle group A on which the coating layer C including silicon oxide is formed has the reduction rate of the integral intensity of 2.5% or more relative to the metal compound particle group A on which the coating layer C including silicon oxide is not formed.

It is preferable that the coating layer C is formed so that the content of Si element in the metal compound particle group A is 0.4 wt% or more and 3.0 wt% or less, and in said range, the increase rate of the internal resistance after the charging and discharging is suppressed as appropriate. If the Si content is more than 3.0 wt%, the coating layer would be excessive relative to the production of deposit, such that the suppression effect of the increase rate of the internal resistance cannot be further expected, while the effect by the coating layer increases, increasing the initial internal resistance. It is further preferable that the coating layer C is formed so that the content of Si element in the metal compound particle group A is 0.4 wt% or more and 1.4 wt% or less, and in said range, the coating layer C is formed on the metal compound particle group A in good balance, and the value of initial internal resistance is suppressed.

The silicon oxide included in the coating layer C has low crystallinity. That is, silicon oxide is amorphous and does not have complete crystal structure. The amorphous silicon oxide is considered to have good bondability with the metal compound particle. Therefore, the coating layer C including amorphous silicon oxide is not formed locally on the surface of the metal compound particles. That is, the coating layer C including amorphous silicon oxide is formed on the surface of the metal compound particles uniformly and to cling to the metal compound particles. Although the bonding condition of the silicon oxide and metal compound particles is not analyzed, it is considered that the bonding is probably a bonding by physisorption of a surface functional group of the metal compound particles, and the silicon oxide, such as hydrogen absorption, or chemical bonding of the surface functional group of the metal compound particles and the surface functional group of the silicon oxide.

Note that carbon other than silicon oxide is included in the coating layer C in an amount of about 1% or less. Therefore, it is assumed that components such as carbon compound or SiOCₙH₂ₙ₊₁, and SiC is included in the coating layer C.

The above described metal compound particle group A is used as the electrode material for power storage device such as hybrid capacitor and lithium-ion secondary battery. In below, an example of the configuration of the hybrid capacitor using the metal compound particle group A of the present embodiment is described.

### (1-1. Power Storage Device)

The lithium-ion secondary battery is one example of power storage device. The lithium-ion secondary battery is produced by making the positive electrode and the negative electrode to face each other with a separator therebetween to form an element, and impregnating the element with the electrolytic solution. The lithium-ion secondary battery charges and discharges in accordance with occlusion and release of lithium ions of the positive and negative electrode. The positive and negative electrode are formed by integrating respective layer of active materials and a current collector. The positive electrode active material and current collector, and the negative electrode active material and current collector are respectively joined via binders using crimping or doctor blade method, etc.

Typically, the current collector is a conductive material such as aluminum, copper, iron, nickel, titanium, steel, and carbon. In particular, aluminum or copper having high heat conductivity and electric conductivity are preferable. The current collector may be in arbitrary shapes such as film-shape, foil-shape, plate-shape, net-shape, expanded metal-shape, and cylindrical shape.

AS the binder, for example, rubbers such as fluorine-based rubber, diene-based rubber, and styrene-based rubber, fluorine-containing polymers such as polytetrafluoroethylene and polyvinylidene fluoride, celluloses such as carboxymethyl cellulose and nitro cellulose, and others such as polyolefin resin, polyimide resin, acrylic resin, nitrile resin, polyester resin, phenol resin, polyvinyl acetic acid, polyvinyl alcohol, and epoxy resin can be cited. These binders may be used in single or in combination of two or more.

### (1-2. Positive Electrode)

The positive electrode active material is formed by kneading and mixing LMO particles, carbon that is a conductive aid, and a binder, and is combined with the current collector. The carbon is not particularly limited as long as it has conductivity, and for example, carbon blacks such as ketjen black, acetylene black, and channel black, fullerene, carbon nanotube, carbon nanofiber, amorphous carbon, carbon fiber, natural graphite, artificial graphite, graphitized ketjen black, mesoporous carbon, gas-phase-method carbon fiber may be cited. As the binder, known binders such as polytetrafluoroethylene, polyvinylidene fluoride (PVDF), polyvinyl fluoride, and carboxymethyl cellulose may be used. The content of the binder is preferably 1 wt% to 30 wt% or less relative to the total amount of the electrode material.

Other positive electrode active materials may be added to said positive electrode active material. As the other positive electrode active materials, layered-rock-salt-type LiMO₂, layered Li₂MnO₃-LiMO₂ solid solution, and spinel-type LiM₂O₄ (in which M in formulae represents Fe, Co, Ni, combinations thereof, or combinations of them and Mn) may be cited. As detailed examples thereof, LiCoO₂, LiNiO₂, LiNi_{4/5}Co_{1/5}O₂, LiNi_{1/3}Co_{1/3}Mn_{1/3}CO₂, LiNi_{1/2}Mn_{1/2}O₂, LiFeO₂, LiMnO₂, Li₂MnO₃-LiCoO₂, Li₂MnO₃-LiNiO₂, Li₂MnO₃-LiNi_{1/3}Co_{1/3}Mn_{1/3}O₂, Li₂MnO₃-LiNi_{1/2}Mn_{1/2}O₂, Li₂MnO₃-LiNi_{1/2}Mn_{1/2}O₂-LiNi_{1/3}Co_{1/3}Mn_{1/3}O₂, and LiMn_{3/2}Ni_{1/2}O4 may be cited.

As for positive electrode active materials other than the above description, sulfur and sulfides such as Li₂S, TiS₂, Mos₂, FeS₂, VS₂, and Sr_{1/2}V_{1/2}S₂, selenides such as NbSe₃, VSe₂, and NbSe₃, oxides such as Cr₂O₅, Cr₃O₈, VO₂, V₃O₈, V₂O₅, and V₆O₁₃, and other composite oxides such as LiNi_{0.8}Co_{0.15}Al_{0.05}O₂, LiVOPO₄, LiV₃O₅, LiV₃O₈, MoV₂O₈, Li₂FeSiO₄, Li₂MnSiO₄, LiFePO₄, LiFe_{1/2}Mn_{1/2}PO₄, LiMnPO₄, and Li₃V₂(PO₄)₃ may be cited.

### (1-3. Negative Electrode)

The negative electrode active material is the above metal compound particle group A and is the metal compound particle group that can occlude and release lithium ions. For example, lithium titanate has an energy storing capability by the insertion and desorption of lithium ions. Since the volume change by the insertion and desorption is approximately 1%, the capacity deterioration is small. Since the charging and discharging potential is approximately 1.55 V (vs. Li/Li+), it is difficult for side reactions such as degradation of electrolytic solution and precipitation of lithium metal by rapid charging and discharging to occur, and the cycle characteristic is excellent.

### (1-4. Separator)

As separators that is a substrate, celluloses such as kraft, manila hemp, esparto, hemp, rayon, and combinations thereof, resins such as polyester-based resins such as polyethylene terephthalate, polybutylene terephthalate, polyethylene naphthalate, and derivatives thereof, polytetrafluoroethylene-based resins, polyvinylidene fluoride-based resins, vinylon-based resins, polyamide-based resins such as aliphatic polyamide, semi-aromatic polyamide, and fully aromatic polyamide, polyimide-based resins, polyethylene resins, polypropylene resins, trimethylpentane resins, polyphenylene sulfide based resins, and acryl resins may be used in single or in combination.

### (1-5. Electrolytic Solution)

An electrolyte of the electrolytic solution is a lithium salt that is the lithium-ion source. The lithium salts may be LiPF₆, LiBF₄, LiClO₄, LiN(SO₂CF₃)₂, LiN(SO₂C₂F₅)₂, CF₃SO₃Li, LiC(SO₂CF₃)₃, LiPF₃(C₂F₅)₃, and mixtures thereof. The concentration of the lithium salts is generally 0.1 to 2.5 mol/L, and is preferably 0.5 to 2 mol/L.

A quaternary ammonium salt may be added as the electrolyte, in addition to the lithium salt. The molar concentration of the lithium salt is 1.6 M or more, and although not particularly limited, the molar concentration of the quaternary ammonium salt is, for example, 1M or more. As the quaternary ammonium salt, tetraethylammonium, triethylmethylammonium, diethyldimethylammonium, ethyltrimetykammonium, methylethylpyrrolidinium, spirobipyrrolidinium, spirobi-(N,N')-bipyrrolidinium, 1-ethyl-3-methylimidazolium, and 1-ethyl-2,3-dimethylimidazolium may be cited as cations. BF₄⁻, PF₆⁻, ClO₄⁻, AsF₆⁻, SbF₆⁻, AlCl₄⁻, RfSO₃⁻, (RfSO₂)₂N⁻, and RfCO₂³ (Rf represents fluoroalkyl group with carbon number of 1 to 8) may be cited as anions.

As solvent of the electrolytic solution, the following solvent may be used. Note that the solvent may be used in single or in combination of two or more. For example, cyclic carbonate ester, chain carbonate ester, phosphate ester, cyclic ether, lactone compound, chain ester, nitril compound, amide compound, and sulfone compound may be cited. As cyclic carbonate esters, ethylene carbonate, propylene carbonate, butylene carbonate, 4-fluoro-1,3-dioxolane-2-on, and 4-(trifluoromethyl)-1,3-dioxolane-2-on may be cited, and ethylene carbonate and propylene carbonate are preferable.

As chain carbonate esters, dimethyl carbonate, ethylmethyl carbonate, diethyl carbonate, methyl n-propyl carbonate, methyl isopropyl carbonate, n-butylmethyl carbonate, diethyl carbonate, ethyl n-propyl carbonate, ethyl isopropyl carbonate, n-butylethyl carbonate, di n-propyl carbonate, diisopropyl carbonate, di n-butyl carbonate, fluoroethylmethyl carbonate, difluororthylmethyl carbonate, and trifluoroethylmethyl carbonate may be cited, and dimethyl carbonate, ethylmethyl carbonate, and diethyl carbonate are preferable.

As phosphate esters, trimethyl phosphate, triethyl phosphate, ethyldimethyl phosphate, and diethylmethyl phosphate may be cited. As cyclic ethers, tetrahydrofuran and 2-methyltetrahydrofuran may be cited. As chain ethers, dimethoxyethane may be cited. As lactone compounds, γ-valerolactone and γ-butyrolactone may be cited. As chain esters, methyl propionate, methyl acetate, ethyl acetate, and methyl formate may be cited. As nitrile compounds, acetonitrile may be cited. As amide compounds, dimethylformamide may be cited. Sulfone compounds may be sulfolane, methylsulfolane, dimethylsulfolane, ethylmethylsulfolane, and isopropysulfolane, but are not limited thereto.

### [2. Production Method]

A production method of the metal compound particle group according to the present disclosure includes the following processes.
(1) A mixing process of mixing the metal compound particle group that is a basis and a source material of silicon oxide.
(2) A heating process of heating a powder obtained by the mixing process at a temperature of 300 °C to 600 °C.

Note that the metal compound particle group A of the present embodiment is produced based on the metal compound particle group that is the basis. The metal compound particle group that is the basis has the 3D network structure. However, the coating layer is not formed on the surface of the metal compound particle group. The metal compound particle group A of the present embodiment is produced by performing procedures described in above processes of (1) and (2). In below, each process is described in detail.

### (1) Mixing Process

In the mixing process, the metal compound particle group that is the basis and the source material of silicon oxide are mixed to produce a mixture solution. As the source material of silicon oxide, silane coupling agent including silicon atom may be used. In detail, the metal compound particle group that is the basis and the silane coupling agent are mixed, and a solvent is added to the mixture to produce the mixture solution.

The silane coupling agent is preferably mixed in the ratio of 1 wt% to 20 wt% relative to the weight of the metal compound particle group that is the basis, and is more preferably mixed in the ratio of 3 wt% to 20 wt% relative to the weight of the metal compound particle group that is the basis. If the mixture amount of the silane coupling agent is less than 1 wt%, the deposit would be significantly produced on the negative electrode material in the power storage device produced using the metal compound particle group A. Therefore, the effect to suppress internal resistance cannot be obtained. Furthermore, if the mixture amount of the silane coupling agent is more than 20 wt%, the thickness of the coating layer C increases.

Accordingly, when the mixture amount of the silane coupling agent is 3 wt% to 20 wt%, by performing the heating process, the coating layer C including Si element in the amount of 0.4 wt % or more and 3.0 wt% or less is formed on the metal compound particle group A, so that the increase rate of the internal resistance after charging and discharging can be suppressed as appropriate. Furthermore, when the mixture amount of the silane coupling agent is 3 to 10t%, by performing the heating process, the coating layer C including Si element in the amount of 0.4 wt % or more and 1,4% or less is formed on the metal compound particle group A, so that the increase rate of the internal resistance after charging and discharging can be suppressed as appropriate, while also suppressing the increase in the initial internal resistance of the power storage device.

Although the silane coupling agent is not particularly limited, the silane coupling agent consisting of a compound represented by the below general formula, and salts thereof are representative, 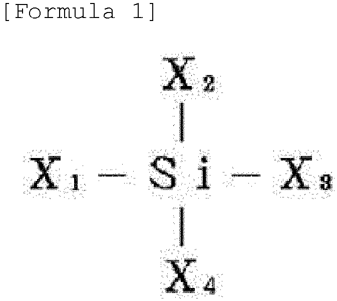 (In the formula, X₁ is atomic groups having vinyl group, amino group, epoxy group, chloro group, mercapto group, ketimine group, acryloyl group, methacryloyl group, styryl group, phenyl group, isocyanate group, or alkyl group, and X₂ to X₄ is alkyl group, alkoxy group, or hydroxyl group.)

As the silane coupling agent, tetraethoxysilane, vinyltrimethoxysilane, N-(2-aminoethyl)3-aminopropyltrimethoxysilane, 3-aaminopropyltriethoxysilane, 3-glycydoxypropyltrimethoxysilane, 2-(3,4-epoxycyclohexyl)ethyltrimethoxysilane, 3-acryloxypropyltrimethoxysilane, 3-methacryloxypropyltrimethoxysilane, 3-mercaptopropyltrimethoxysilane, N-[2-(vinylbenzylamino)ethyl]-3-aminopropyltrimethoxysilane hydrocholoride may be cited.

As the solvent, solution that does not give adverse effect to the reaction can be used without any particular limitation, and water, methanol, ethanol, and isopropyl alcohol can be used as appropriate. Mixture of Two types or more solvents may be used.

The produced mixture solution is sufficiently stirred by using homogenizer, etc., so that the metal compound particle group and the silane coupling agent are dispersed in the mixture solution. By stirring, the silane coupling agent attaches to the surface and gap of the metal compound particle group that is the basis. The mixture solution after stirring is left standing still to aggregate the compound particle group and silane coupling agent dispersed in the mixture solvent, and a mixture powder of the compound particle group and the silane coupling agent is collected.

Here, alkaline compound may be further added to the mixture solution. By adding alkaline solution, the attachment amount of the silicon oxide relative to the amount of the source material of the silicon oxide supplied during the production process becomes large, so that the increase rate of the internal resistance after charging and discharging can be further suppressed as appropriate. Otherwise, when the same suppression effect as the case in which alkaline compound is not added is to be obtained, the amount of the source material of the silicon oxide supplied during the production process can be decreased, resulting in the reduction of cost. Although not definite, it is assumed the silicon oxide became easier to be attached to the surface of the metal compound particle group because the reactivity between the metal compound particle group and the silane coupling agent was improved by the catalytic effect of the alkaline compound. Therefore, it is considered that the attachment amount of the silicon oxide relative to the amount of the source material of the silicon oxide supplied during the production process becomes large and that the increase rate of the internal resistance after charging and discharging is suppressed in comparison with the case in which alkaline compound is not added. Therefore, the addition amount of the alkaline compound is preferably 0.05 to 5 mmmol relative to 10 g of the metal compound particle group.

As the alkaline compound that can be added to the mixture solution, hydroxide, acetate, sulfate, carbonate, nitrate, and chloride of alkali metal or alkali earth metal, and inorganic alkaline agent or organic alkaline agent may be cited. For example, alkali metals or alkali earth metals may be lithium, sodium, potassium, and calcium, etc. For example, inorganic alkaline agent may be ammonium water, etc. As organic alkaline agent, amines such as trimethylamine, diethylamine, pyridine, and tetramethylguanidine may be cited. One type or two types or more of the alkaline compound may be added to the mixture solution.

Note that the alkaline compound that is preferable for addition is an alkaline compound which is the same kind as the source material of the metal compound particle group and the electrolyte in the electrolytic solution, and which does not work as impurities in the characteristic of the metal compound particle group or which is removed in the heat processing, etc., during the production process and does not remain in the metal compound particle group, such as lithium salt.

Furthermore, other than the method of further adding alkaline compound to the mixture solution, the metal compound particle group may be pre-processed by alkaline compound before the mixing process with the silane coupling agent. In the pre-processing process, alkaline compound, the metal compound particle group, and the solvent are mixed together, filtered, and dried. Then, the filtered and dried mixture used in the mixing process. The mixture may be left for 1 to 100 hours at the temperature of 30 °C to 100 °C after said mixing. By pre-processing the metal compound particle with alkaline compound, the increase rate of the internal resistance after charging and discharging can be further suppressed as appropriate. Note that the solvent and alkaline compound in this method may be the same kind as in the method of further adding alkaline compound to the mixture solution.

### (2) Heating Process

In the heating process, heat processing is performed to the mixture powder obtained in the mixing process. The heating process is performed for 1 to 24 hours at the temperature of 300 °C to 600 °C. In the heating process, it is considered that silicon oxide derived from the silane coupling agent is produced in amorphous and is bonded with the metal compound particle group that is the basis.

Note that, before the heating process, the aggregates obtained in the mixing process may be collected and dried. The drying is heat drying, and it is preferable to heat and dry the aggregates at the temperature of 20 to 180 °C. furthermore, the heating time may be 6 to 48 hours. By the drying process, the metal compound particle group that is the basis and the silane coupling agent can be bonded in the condition the solvent included in the aggregates is evaporated by heating, to obtain the mixture powder.

### [3. Action and Effect]

Actions and Effects achieved by the metal compound particle group A and the electrode for power storage device which includes and configured of the metal compound particle group A is as follows.
(1) The metal compound particle group has the 3D network structure in which metal compound particles are linked, in which the coating layer including silicon oxide is formed on a part of the metal compound particle group.
   When the metal compound particle group A is used as the negative electrode active material of the electrode for power storage device, the deposits are prevented from being produce on the negative electrode by the coating layer C. Therefore, the increase in the internal resistance of the power storage device is suppressed.
(2) The coating layer including silicon oxide is formed on at least a part of the surface of the metal compound particle group.
   Since the coating layer C is formed of the surface of the metal compound particle, the deposit is surely prevented from being produced on the surface of the metal compound particle. Therefore, the increase in the internal resistance of the power storage device is suppressed.
(3) The amount of Si element is 0.4 wt% or more and 3.0 wt% or less relative to all metal compound particle group.
   Since the coating layer C is formed so that the amount of Si element included based on the silicon oxide is 0.4 wt% or more and 3.0 wt% or less relative to all metal compound particle group, the coating layer C has the appropriate thickness, and the increase rate of the internal resistance of the power storage device after charging and discharging can be suppressed.
(4) The amount of Si element is 0.4 wt% or more and 1.7 wt% or less relative to all metal compound particle group.
   Since the coating layer C is formed so that the amount of Si element included based on the silicon oxide is 0.4 wt% or more and 1.7 wt% or less relative to all metal compound particle group, the coating layer C has the appropriate thickness, and the increase rate of the internal resistance of the power storage device after charging and discharging can be suppressed while the increase in the internal resistance of the power storage device is suppressed.
(5) The gap 2 exists in the 3D network structure, and the coating layer C including silicon oxide is formed on the metal compound particle defining the gap.
   The coating layer C is formed not only on the outer circumferential surface of the metal compound particle group A, but also on the surface of the metal compound particle in the gap 2 in the inner structure of the metal compound particle group A. Since the coating layer C is sufficiently formed as much as it is formed in the gap, the effect of suppressing the production of the deposit and the increase in the internal resistance can be improved.
(6) The coating layer including silicon oxide is the amorphous silicon oxide.
   Since the amorphous silicon oxide is included in the coating layer C, the bondability between the coating layer C and the metal compound particle is improved. Therefore, the metal compound particle group A which the coating layer C is formed thereon uniformly and to cling to the metal compound particles can be obtained. When said metal compound particle group A is used in the power storage device, the coating layer C would not be melted by the electrolytic solution, etc. Therefore, in the power storage device, the production of the deposit and the increase in the internal resistance can be surely suppressed.
(7) The pore volume change rate calculated from the pore distribution of the metal compound particle group measured by the nitrogen adsorption measurement method is more than 0.008 dV_{p/}drₚ relative to the pore diameter of 10 nm or less.
   In the metal compound particle group having the pore volume change rate of more than 0.008 dV_{p/}drₚ relative to the pore diameter of 10 nm or less, clogging of the gap is solved. That is, the coating layer C does not fill the gap. Therefore, the increase in the initial internal resistance can be suppressed.
(8) The reduction rate of the integrated intensity is 25% or more relative to the metal compound particle group on which the coating layer including silicon oxide is not formed.
   In the metal compound particle group in which the coating layer C, the integral intensity ratio is decreased in comparison with the metal compound particle group having the uncoated coating layer including silicon oxide. In the metal compound particle group according to the present embodiment, since the production of the deposit on the negative electrode is suppressed by the coating layer, the increase in the internal resistance can be suppressed.
   Furthermore, the power storage device achieves the following actions and effects.
(9) The power storage device includes the element which includes the negative electrode that includes and is configured of the above metal compound particle group A, and the positive electrode, and the electrolytic solution impregnated in the element, in which the electrolytic solution includes the fluorine-containing compound.
   In the power storage device, for example, when LiPF₆ or LiBF₄, etc., that are the fluorine-containing compound are used in the electrolytic solution, it is considered that the component in the electrolytic solution reacts at the surface of the negative electrode, and the deposit from the fluorine is produced on the negative electrode. The metal compound particle group A according to the present embodiment is assumed to especially has the effect to suppress the production of the deposit from the fluorine.
   Furthermore, the production method of the metal compound particle group achieves the following actions and effects.
(10) The method includes the mixing process of mixing the metal compound particle group that is the basis and the source material of silicon oxide, and the heating process of heating the powder obtained by the mixing process at a temperature of 300 °C to 600 °C.
   By performing the heat processing at the temperature of 300 °C to 600 °C to the mixture powder of the metal compound particle group that is the basis and the source material of silicon oxide, the coating layer C including the silicon oxide from the source material of silicon oxide is formed on the surface of the metal compound particle. By the heating process, the silicon oxide becomes amorphous and the bondability with the metal compound particle can be improved.
(11) The source material of silicon oxide is in the ratio of 1 wt% to 20 wt% relative to the weight of the metal compound particle group that is the basis.
   By mixing 1 wt% to 20 wt% of the source material of silicon oxide, the appropriate amount of the coating layer C is formed on the metal compound particle. That is, the coating layer C that can suppress the increase in the internal resistance after charging and discharging while suppressing the increase in the initial internal resistance can be formed.
(12) The source material of silicon oxide is in the ratio of 3 wt% to 20 wt% relative to the weight of the metal compound particle group that is the basis.
   By mixing the source material of silicon oxide in the amount of 3 wt% to 20 wt% and by the heating process at the temperature of 300 °C to 600 °C, the coating layer C having appropriate thickness and including Si element in the amount of 0.4 wt% or more and 3.0 wt% or less is formed on the metal compound particle group A, and the increase rate of the internal resistance after charging and discharging can be suppressed as appropriate.
(13) The source material of silicon oxide is in the ratio of 3 wt% to 10 wt% relative to the weight of the metal compound particle group that is the basis.
   By mixing the source material of silicon oxide in the amount of 3 wt% to 10 wt% and by the heating process at the temperature of 300 °C to 600 °C, the coating layer C having further appropriate thickness and including Si element in the amount of 0.4 wt% or more and 1.7 wt% or less is formed on the metal compound particle group A, and the increase rate of the internal resistance after charging and discharging can be suppressed as appropriate while suppressing the increase in the initial internal resistance.
(14) In the mixing process, one type or two types or more alkaline compound is mixed. The alkaline compounds are hydroxide, acetate, sulfate, carbonate, nitrate, and chloride of alkali metal or alkali earth metal, and inorganic alkaline agent or organic alkaline agent.
   When the alkaline compound is added in the mixing process, the attachment amount of silicon oxide relative to the amount of the source material of silicon oxide supplied in the production process becomes large, so that the increase rate of the internal resistance after charging and discharging can be further suppressed as appropriate by the smaller supply amount of the silane coupling agent. Otherwise, when the same suppression effect as the case in which alkaline compound is not added is to be obtained, the amount of the source material of the silicon oxide supplied during the production process can be decreased, resulting in the reduction of cost.
(15) Or, before the mixing process, the metal compound particle group that is the basis is pre-processed the with alkaline compound.

By pre-processing the metal compound particle group with the alkaline compound, the increase rate of the internal resistance after charging and discharging can be further suppressed as appropriate.

### EXAMPLES

The present disclosure is described below using examples, however, the present disclosure is not limited to the examples.

### (Example 1)

In example 1, lithium titanate was used as the metal compound particle group that is the basis, and (CH₃O)₃SiC₃H₆OCOCH=CH₂ including acryloyl group as the organic functional group was used as the silane coupling agent. 5 wt% of the silane coupling agent was mixed to lithium titanate. In the mixing process, the mixture was stirred for 10 minutes by 15000 rpm using homogenizer. The aggregate after it had been left standing still was vacuum-dried for 12 hours at 150 °C. Then, the heat processing was performed to the dried powder for 3 hours at 400 °C.

### (Example 2)

In example 2, 10 wt% of the silane coupling agent was mixed to lithium titanate. Other conditions were the same as example 1.

### (Example 3)

In example 3, 20 wt% of the silane coupling agent was mixed to lithium titanate. Other conditions were the same as example 1.

### (Example 4)

In example 2, 3 wt% of the silane coupling agent was mixed to lithium titanate. Other conditions were the same as example 1.

### (Example 5)

In example 5, 3-glycydoxypropyltrimethoxysilane including epoxy group as the organic functional group was used as the silane coupling agent, and 3 wt% of 3-glycydoxypropyltrimethoxysilane was mixed to lithium titanate. Other conditions were the same as example 1. That is, example 5 was different from example 4 in the point that the silane coupling agent was epoxy-based.

### (Example 6)

In example 6, 3-glycydoxypropyltrimethoxysilane was used as the silane coupling agent, and 5 wt% of 3-glycydoxypropyltrimethoxysilane was mixed to lithium titanate. Other conditions were the same as example 1. That is, example 6 was the same as example 5 in that the silane coupling agent was epoxy-based, but had different addition amount of the silane coupling agent from example 5.

### (Example 7)

In example 7, 3-glycydoxypropyltrimethoxysilane was used as the silane coupling agent, and 10 wt% of 3-glycydoxypropyltrimethoxysilane was mixed to lithium titanate. Other conditions were the same as example 1. That is, example 7 was the same as example 5 in that the silane coupling agent was epoxy-based, but had different addition amount of the silane coupling agent from example 5.

### (Example 8)

In example 8, 3-glycydoxypropyltrimethoxysilane was used as the silane coupling agent, and 20 wt% of 3-glycydoxypropyltrimethoxysilane was mixed to lithium titanate. Other conditions were the same as the example 1.

That is, example 8 was the same as example 5 in that the silane coupling agent was epoxy-based, but had different addition amount of the silane coupling agent from example 5.

### (Example 9)

In example 9, 3-glycydoxypropyltrimethoxysilane was used as the silane coupling agent, and 3 wt% of 3-glycydoxypropyltrimethoxysilane was mixed to lithium titanate. Furthermore, in example 9, in addition to lithium titanate and the silane coupling agent, lithium hydroxide was added as the alkaline compound, and then the mixing process was performed. Lithium hydroxide was added in the ratio of 0.25 mmol relative to 10 g of lithium titanate. Other conditions were the same as example 1. That is, example 9 was different from example 1 in the point that the alkaline compound was added.

### (Example 10)

In example 10, 3-glycydoxypropyltrimethoxysilane was used as the silane coupling agent, and 5 wt% of 3-glycydoxypropyltrimethoxysilane was mixed to lithium titanate. Other conditions were the same as the example 9. That is, example 10 was the same as example 9 in that the alkaline compound was added, but had different addition amount of the silane coupling agent from example 9.

### (Example 11)

In example 11, 3-glycydoxypropyltrimethoxysilane was used as the silane coupling agent, and 10 wt% of 3-glycydoxypropyltrimethoxysilane was mixed to lithium titanate. Other conditions were the same as the example 9. That is, example 11 was the same as example 9 in that the alkaline compound was added, but had different addition amount of the silane coupling agent from example 9.

### (Example 12)

In example 12, 3-glycydoxypropyltrimethoxysilane was used as the silane coupling agent, and 20 wt% of 3-glycydoxypropyltrimethoxysilane was mixed to lithium titanate. Other conditions were the same as the example 9. That is, example 12 was the same as example 9 in that the alkaline compound was added, but had different addition amount of the silane coupling agent from example 9.

### (Example 13)

In example 13, 3-glycydoxypropyltrimethoxysilane was used as the silane coupling agent, and 3 wt% of 3-glycydoxypropyltrimethoxysilane was mixed to lithium titanate. However, before the mixing process to add the silane coupling agent, lithium hydroxide that is the alkaline compound, water that is the solvent, and lithium titanate that is the metal compound particle group that is the basis were mixed, stirred by the stirrer for 30 minutes, left for 64 hours at 60 °C, filtered, washed by water, and dried for 24 hours at 30 °C, to perform pre-processing. Lithium hydroxide was added in the ratio of 0.25 mmol relative to 10 g of lithium titanate. Other conditions were the same as the example 9. That is, example 13 was different from example 9 in the point that the metal compound particle group that is the basis was pre-processed by the alkaline compound.

### (Comparative Example 1)

In comparative example 1, the same processing as example 1 was performed to lithium titanate except that the silane coupling agent was not mixed.

### (Comparative Example 2)

In comparative example 2, the silane coupling agent was not mixed. Furthermore, only vacuum-drying was performed after the mixing process, and the heat processing was not performed.

### (Comparative Example 3)

In comparative example 3, 5 wt% of the silane coupling agent was mixed to lithium titanate. Furthermore, only vacuum-drying was performed after the mixing process, and the heat processing was not performed.

### (Comparative Example 4)

In comparative example 4, 10 wt% of the silane coupling agent was mixed to lithium titanate. Furthermore, only vacuum-drying was performed after the mixing process, and the heat processing was not performed.

### (Comparative Example 5)

In comparative example 5, 20 wt% of the silane coupling agent was mixed to lithium titanate. Furthermore, only vacuum-drying was performed after the mixing process, and the heat processing was not performed.

### (Comparative Example 6)

In comparative example 6, 3 wt% of the silane coupling agent was mixed to lithium titanate. Furthermore, only vacuum-drying was performed after the mixing process, and the heat processing was not performed.

### (Formation of Coating Layer)

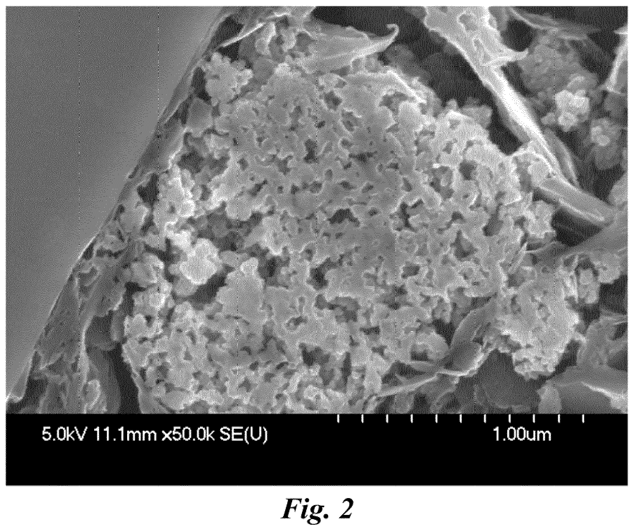

Firstly, the observation result of the obtained lithium titanate is described in below. Figs. 2 to 4 are SEM image of the lithium titanate particle group of comparative examples 1 and 4 and example 2 by the scanning electron microscope.

Fig. 2 is the SEM image (× 50.0 K) of lithium titanate particle group of comparative example 1. The lithium titanate particle group of comparative example 1 in which the silane coupling agent was not added had the 3D network structure. However, the coating layer C was not formed on the outer circumference surface and surface of the gap of the metal compound particle group.

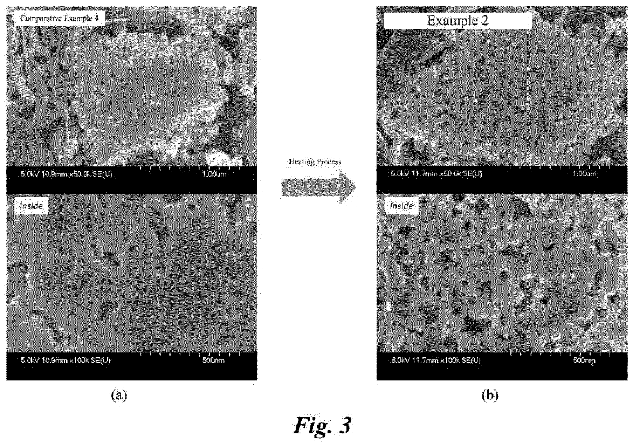

Fig. 3 is the SEM images of the lithium titanate particle group of comparative example 4 and example 2. Fig. 3(a) is the SEM image of the lithium titanate particle group of comparative example 4, in which the magnification of the upper image is × 50.0 K and the magnification of the lower image is × 100 K. As it is apparent from Fig 3(a), in comparative example 4 in which 10 wt% of the silane coupling agent was mixed and only drying was performed, the outer circumference surface and surface of the gap of the metal compound particle group was filled with the silane coupling agent. The silane coupling agent was attached to the lithium titanate particle group so as to fill the gap of the lithium titanate particle group.

On the other hand, Fig. 3(b) is the SEM image of the lithium titanate particle group of example 2, in which the magnification of the upper image is × 50.0 K and the magnification of the lower image is × 100 K. As it is apparent from Fig 3(b), in example 2 in which 10 wt% of the silane coupling agent was mixed and drying and heating was performed, the coating layer including silicon oxide from the silane coupling agent was formed on the outer circumference surface and surface of the gap of the metal compound particle group. The coating layer was on the surface of the lithium titanate particle group at the gap of the lithium titanate particle group, but was not formed to fill the gap.

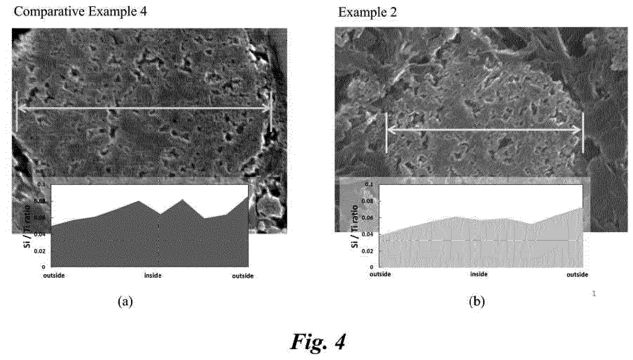

Here, Fig. 4 indicates the element analysis result regarding the lithium titanate particle group of comparative example 4 and example 2. Fig. 4 (a) indicates the analysis result of the lithium titanate particle group of comparative example 4, and Fig. 4 (b) indicates the analysis result of the lithium titanate particle group of example 2. The element analysis is performed so as to cross the diameter of the lithium titanate particle group, as illustrated by an arrow in the SEM images in each image. Furthermore, in graphs in the figures, Si/Ti ratio was plotted on the vertical axis, and the ratio of included Si from the silane coupling agent was verified.

From Figs. 4(a) and 4(b), in the lithium titanate particle group of comparative example 4 and example 2, it was found that Si existed not only on the outer circumferential surface of the lithium titanate particle group but also on the particle surface of the gap in the inner structure. That is, it was found that Si existed entirely, and not locally, in both of the lithium titanate particle groups of comparative example 4 and example 2.

### (Pore Diameter Distribution)

Next, the pore diameter distribution was measured for the lithium titanate particle groups obtained in examples 1 and 2 and comparative examples 2 to 4. A nitrogen gas adsorption measurement method was used as the measurement method. In detail, nitrogen gas was introduced in the pore formed on the surface of the lithium titanate particle and the interior of the lithium titanate particle which was communicated with the surface, and the adsorption amount of nitrogen was acquired. Then, the pressure of the introduced nitrogen gas was eventually increased, and the adsorption amount of nitrogen gas relative to the equilibrium pressure was plotted, to obtain an adsorption isothermal curve. The measurement was performed using high precision gas/vapor adsorption amount measurement apparatus BELSORP-max-N (NIPPONPAINT Co., Ltd.).

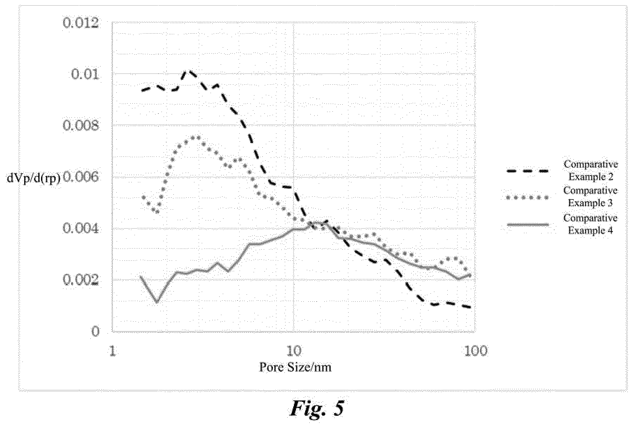

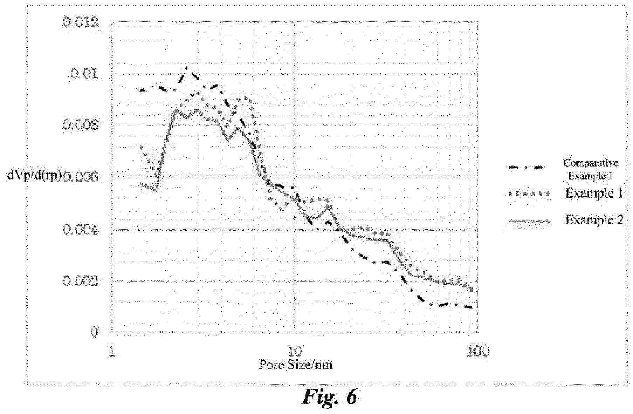

Figs. 5 and 6 are graphs in which the pore diameter is plotted in the horizontal axis and the pore volume change rate dVₚ/d(rₚ) was plotted in the vertical axis. Fig. 5 indicates the pore diameter distribution data for comparative examples 2 to 4 which were not heated. As it is apparent from Fig .5, a number of the gaps having the diameter of 10 nm or less had significantly decreased in comparative examples 3 and 4 in which the silane coupling agent was mixed in comparison with comparative example 2 in which the silane coupling agent was not mixed. That is, it was found that the gap was filled by the silane coupling agent in comparative examples 3 and 4 in which the silane coupling agent was mixed.

Fig. 6 indicates the pore diameter distribution data of comparative example 1 and examples 1 and 2. As it is apparent from Fig. 6, examples 1 and 2 in which the silane coupling agent was mixed had similar numbers of gaps as comparative example 1 in which the silane coupling agent was not mixed. In detail, in examples 1 and 2, the value of the pore volume change rate of the pore diameter of 10 nm or less was more than 0.008dVₚ/drₚ. Note that the pore volume change rate do not have to be uniformly more than 0.008dV_{p/}drₚ for the pore diameter of 10 nm or less as long as a part of the pore volume change rate is more than 0.008. In examples 1 and 2 in which the silane coupling agent was mixed and heating was performed, it was found that the clogging of the gap was resolved by the formation of the coating layer including silicon oxide from the silane coupling agent.

### (Internal Resistance)

To verify the internal resistance, lithium-ion secondary batteries were produced using the lithium titanate particle groups of examples 1 to 4 and comparative examples 1 to 6. In detail, 5 wt% of polyvinylidene fluoride and an appropriate amount of N-methylpyrrolidone were added to each particle group and were sufficiently kneaded to form a slurry, and the slurry was applied on the aluminum foil and dried to obtain the negative electrode. Furthermore, LMO particle, acetylene black as the conductive aid, and polyvinylidene fluoride (PVDF) as the binder were added to the solvent and were stirred by the homogenizer to produce the slurry mixture solution. The mixture solution was applied and dried on the aluminum current collector foil, and the foil was pressed to obtain the positive electrode active material layer sheet that is the positive electrode. The separator was interposed between the positive electrode and the negative electrode to form the element, and the element was impregnated with the electrolytic solution. For the electrolytic solution, LiBF₄ with the molar concentration of 1.6 was used as the solute, and γ-butyrolactone was used as the solvent. Then, the element impregnated with the electrolytic solution was heat-sealed using the laminated film to produce the lithium-ion secondary batteries according to examples 1 to 4 and comparative examples 1 to 6.

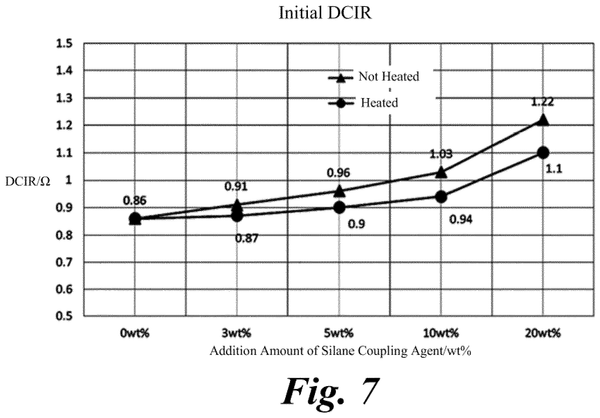

Fig. 7 indicates a result of the initial internal resistance (DCIR) of the lithium-ion secondary batteries of examples 1 to 4 and comparative examples 1 to 6 produced as above. In Fig. 7, a series linking the circular plots is a series that had undergone the heating process and includes comparative example 1 and examples 1 to 4, and a series linking the triangular plots is a series that had not undergone the heating process and includes comparative examples 2 to 6.

From Fig. 7, in comparative examples 1 and 2 in which the silane coupling agent was not mixed, initial DCIR did not change. Next, when comparing comparative example 1 and examples 1 to 4 which had undergone the heating process by referring to circular-plot series, in example 4 in which 3 wt% of the silane coupling agent was mixed, example 1 in which 5 wt% of the silane coupling agent was mixed, and example 2 in which 10 wt% of the silane coupling agent was mixed, the internal resistance increased compared to comparative examples 1, and the increase tendency was slow. On the other hand, in example 3 in which 20 wt% of the silane coupling agent was mixed, the internal resistance largely increased compared to comparative examples 1. Therefore, it is considered that the internal resistance further increases when mixing 20 wt% or more of the silane coupling agent.

Furthermore, when considering comparative examples 2 to 6 which had not undergone the heating process by referring to triangular-plot series, in comparative examples 3 to 6 in which the silane coupling agent was mixed, the internal resistance largely increased compared to comparative examples 2 in which the silane coupling agent was not mixed. When comparing the circular-plot series and the triangular-plot series, examples 1 to 4 which had undergone the heating process had suppressed the increase in the internal resistance more for each mixing ratios. It is considered because in comparative examples 3 to 6 which had not undergone the heating process, the silane coupling agent filled the gap such that the impregnating ability of the electrolytic solution decreased and the initial internal resistance increased. On the other hand, in examples 1 to 4 which had undergone the heating process, the coating layer was not formed to fill the gap. Therefore, it is considered that the increase in the initial internal resistance was suppressed. It is assumed that the organic parts of the silane coupling agent had disappeared by the heating process such that the gap was formed.

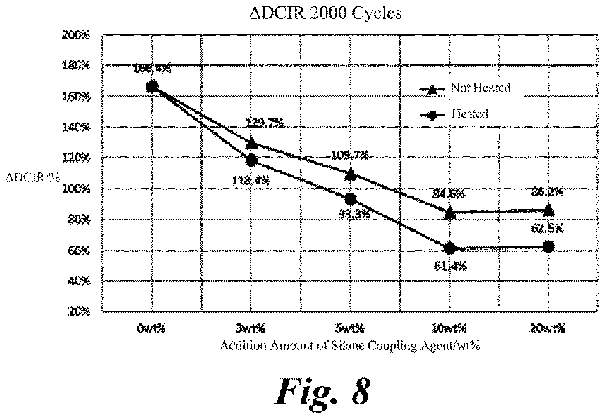

Next, the charging-discharging test was performed with the current of 20 mA and the voltage of 1.5 V or more and .27 V or less at 60 °C to acquire the increase rate of the internal resistance from the initial internal resistance and the internal resistance after charging and discharging. Fig. 8 indicates the internal resistance after 2000 cycles. The increase rate of the internal resistance was acquired by internal resistance after charging and discharging/initial internal resistance. In Fig. 8, a series linking the circular plots is a series that had undergone the heating process and includes comparative example 1 and examples 1 to 4, and a series linking the triangular plots is a series that had not undergone the heating process and includes comparative examples 2 to 6.

Firstly, in comparative examples 1 and 2, the increase rate of the internal resistance was both 166.4%. In comparative examples 1 and 2, since the silane coupling agent was not mixed, the deposit was produced on the negative electrode, and the internal resistance significantly increased. When comparing comparative example 1 and examples 1 to 4 which had undergone the heating process by referring to circular-plot series, firstly, in example 4 in which 3 wt% of the silane coupling agent was mixed, the increase rate was 118.4%, which means that the increase rate was suppressed compared to comparative example 1. Furthermore, in example 1 in which 5 wt% of the silane coupling agent was mixed, the increase rate was 93.3%, which means that the increase rate was suppressed compared to comparative example 1. In addition, in example 2 in which 10 wt% of the silane coupling agent was mixed, the increase rate was 61.2%, which means that the suppression effect of the increase rate was improved. Next, in example 3 in which 20 wt% of the silane coupling agent was mixed, the increase rate was 62.5%, which was slightly increased from example 2. From the result, it was found that the suppression effect of the increase rate stayed flat even when 10 wt% or more of the silane coupling agent was mixed.

From above, it was found that the initial internal resistance significantly increased when more than 20 wt% of the silane coupling agent was mixed. Furthermore, it was found that when 1 wt% or more of the silane coupling agent was mixed, the production of the deposit could be prevented and the increase in the internal resistance after charging and discharging can be suppressed. In particular, by mixing 3 to 10 wt% of the silane coupling agent, it became obvious that the increase rate of the internal resistance after charging and discharging could be suppressed as appropriate while suppressing the increase in the initial internal resistance of the power storage device.

Furthermore, when considering comparative examples 2 to 6 which had not undergone the heating process by referring to triangular-plot series, in comparative examples 3 to 6 in which the silane coupling agent was mixed, the increase rate of the internal resistance decreased compared to comparative examples 2 in which the silane coupling agent was not mixed. Therefore, it was found that the suppression effect of the increase rate could be obtained by mixing the silane coupling agent.

However, it was found that when comparing the circular-plot series and the triangular-plot series, examples 1 to 4 which had undergone the heating process had low increase rate of the internal resistance for each mixing ratios. It was considered because in comparative examples 3 to 6 which had not undergone the heating process, the silane coupling agent did not form the coating layer on the surface of the lithium titanate particle group and was only attached to the surface of the lithium titanate particle group. Therefore, it was suggested that the silane coupling agent attached on the surface of the lithium titanate particle group was dissolved by the electrolytic solution, and the deposit might be produced on the negative electrode.

Furthermore, lithium-ion secondary batteries which had lithium titanate particle group of examples 5 to 8 as the negative electrode active material layer and which was produced using epoxy-type silane coupling agent was produced. The production method and production condition of these lithium-ion secondary batteries was the same as the lithium-ion secondary batteries using the lithium titanate particle group of examples 1 to 4 and comparative examples 1 to 6. Then, the increase rate of the initial internal resistance (DCIR) and the internal resistance after 2000 cycles of the lithium-ion secondary batteries using the lithium titanate particle group of examples 5 to 8 and the lithium-ion secondary battery using the lithium titanate particle group of comparative example 1 in which the silane coupling agent was not added were measured. The measurement method of the increase rate of the initial internal resistance and the internal resistance was the same as examples 1 to 4 and comparative example 1.

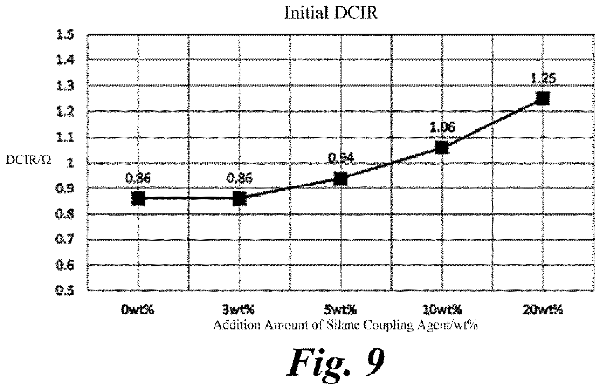

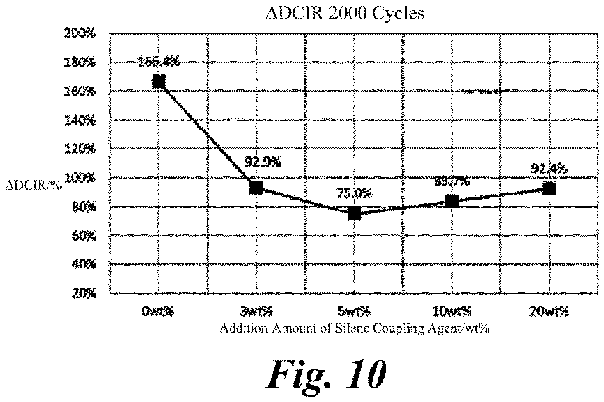

The measurement result is indicated in Figs. 9 and 10. Fig. 9 is a graph indicating a relationship between the addition amount of the silane coupling agent and the initial internal resistance (DCIR). Fig. 10 is a graph indicating a relationship between the addition amount of the silane coupling agent and the increase rate of the internal resistance. As indicated in Figs. 9 and 10, it was found that the increase rate of the initial internal resistance (DCIR) and the internal resistance exhibited the same tendency as examples 1 to 4.

That is, it was found that the production of the deposit was prevented when 1 wt% or more of the silane coupling agent was mixed regardless of the types of the silane coupling agent. Furthermore, it was found that the increase in the internal resistance accompanied by the increase of the silane coupling agent settles slowly when the addition amount of the silane coupling agent was 20 wt% or less regardless of the types of the silane coupling agent. In addition, by mixing the silane coupling agent in the amount of 3 wt% to 10 wt%, it became obvious that the increase rate of the internal resistance after charging and discharging could be suppressed as appropriate while suppressing the increase in the initial internal resistance of the power storage device regardless of the types of the silane coupling agent.

Furthermore, lithium-ion secondary batteries which had lithium titanate particle group of examples 9 to 12 as the negative electrode active material layer and to which the silane coupling agent and lithium hydroxide as the alkaline compound were added was produced. The production method and production condition of these lithium-ion secondary batteries was the same as the lithium-ion secondary batteries using the lithium titanate particle group of examples 1 to 8 and comparative examples 1 to 5. Then, the increase rate of the initial internal resistance (DCIR) and the internal resistance after 2000 cycles of the lithium-ion secondary batteries using the lithium titanate particle group of examples 9 to 12 and the lithium-ion secondary battery using the lithium titanate particle group of comparative example 1 in which the silane coupling agent was not added were measured. The measurement method of the increase rate of the initial internal resistance and the internal resistance was the same as examples 1 to 8 and comparative example 1.

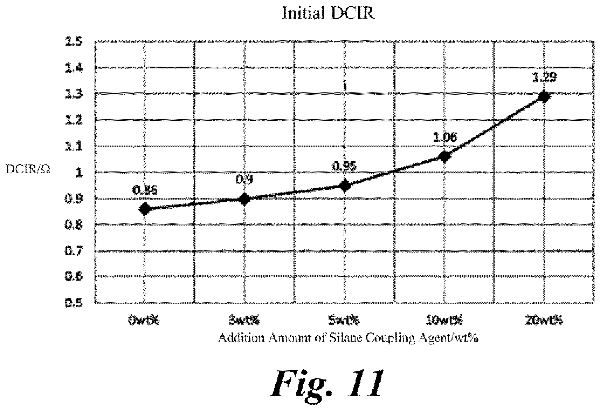

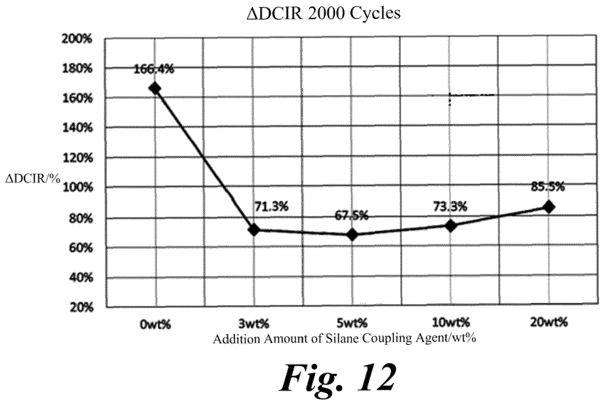

The measurement result is indicated in Figs. 11 and 12. Fig. 11 is a graph indicating a relationship between the addition amount of the silane coupling agent and the initial internal resistance (DCIR). Fig. 12 is a graph indicating a relationship between the addition amount of the silane coupling agent and the increase rate of the internal resistance. As indicated in Fig. 11, in the produced lithium titanate particle group in which the silane coupling agent and the alkaline compound was added, it was found that the value of the initial internal resistance (DCIR) did not change or slightly changed compared to the case in which alkaline compound was not added. On the other hand, as illustrated in Fig. 12, it was found that in the produced lithium titanate particle group in which the silane coupling agent and the alkaline compound was added, the increase rate of the internal resistance was further suppressed compared to the case in which alkaline compound was not added.

For example, comparing Figs. 12 and 10, when the addition amount of the silane coupling agent was 3 wt%, the difference of the increase rate of the internal resistance between the cases in which the alkaline compound was added and not added was 21.6%. When the addition amount of the silane coupling agent was 5 wt%, the difference of the increase rate of the internal resistance between the cases in which the alkaline compound was added and not added was 7.5%. When the addition amount of the silane coupling agent was 10 wt%, the difference of the increase rate of the internal resistance between the cases in which the alkaline compound was added and not added was 10.4%. When the addition amount of the silane coupling agent was 20 wt%, the difference of the increase rate of the internal resistance between the cases in which the alkaline compound was added and not added was 6.9%. In particular, if the alkaline compound was added, the increase rate of the internal resistance when the addition amount of the silane coupling agent was 20 wt% was suppressed as low as the case in which the alkaline compound was not added and the addition amount of the silane coupling agent was 10 wt%.

That is, it was found that by adding the alkaline compound during the production process, the suppression effect of the increase rate of the internal resistance relative to the amount of silane coupling agent supplied in the production process was improved.

Next, a lithium-ion secondary battery which had lithium titanate particle group of example 8 as the negative electrode active material layer was produced by using lithium hydroxide as the alkaline compound, mixing water and lithium titanate particle, then performing pre-processings such as filtering and drying the mixture and using the silane coupling agent. The production method and production condition of the lithium-ion secondary battery was the same as the lithium-ion secondary batteries using the lithium titanate particle group of examples 1 to 8 and comparative examples 1 to 5. Then, the increase rate of the initial internal resistance (DCIR) and the internal resistance after 2000 cycles were measured. The measurement method of the increase rate of the initial internal resistance and the internal resistance was the same as examples 1 to 8 and comparative example 1.

The measurement result is indicated in the below table 1. In the below table 1, the result of the lithium-ion battery having the lithium titanate particle group of example 9 as the negative electrode active material layer was also described. In example 13, the mixing process of the silane coupling agent was performed after the lithium titanate particle group was pre-processed by the alkaline compound, while in example 9, the lithium titanate particle group, the alkaline compound, and the silane coupling agent were mixed, meaning that example 9 and example 13 were different.

**[Table 1]**

| | Initial DCIR (Ω) | ΔDCIR(%) (After 2000 Cycles) |
|---|---|---|
| Example 13 | 0.86 | 53.3 |
| Example 9 | 0.88 | 71.3 |

As indicate in Table 1, there was not much difference between example 9 and example 13 for the initial internal resistance. However, in example 13, the increase rate of the internal resistance after 2000 cycles was further excellent. That is, it was found that by pre-processing the metal compound particles group with the alkaline compound, the suppression effect of the increase rate of the internal resistance was further improved.

### (Si Amount in Comparative Example)

The reason why the suppression effect of the increase rate of the internal resistance was low in comparative examples 3 to 6 was investigated. In detail, the lithium titanate particle group and the silane coupling agent (10 wt%) was added to isopropyl alcohol to produce the mixture solution. The mixture solution was stirred using the homogenizer, and the obtained aggregate was dried for 12 hours at 150 °C. Note that the heating process was not performed. The dried powder was washed using isopropyl alcohol for three times. The washed powder was dried for 12 hours at 150 °C.

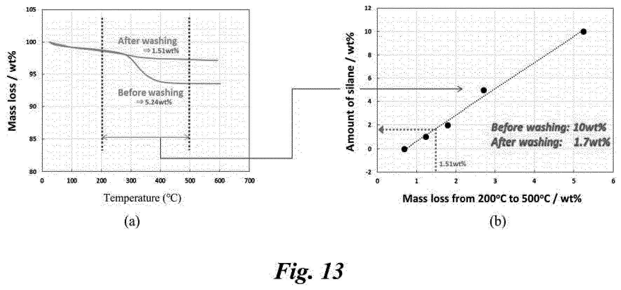

Fig. 13(a) indicates the result of thermogravimetric analysis of the powder which was dried and the powder which was washed and then dried. From Fig. 13, (a), the weight of 5.24 wt% was lost by heating from the powder before washing. On the other hand, the weight of 1.51 wt% was lost by heating from the powder which was washed and then dried. When converting the lost amount of 1.51 wt% to the amount of the silane coupling agent, the amount of the silane coupling agent was 1.7 wt% as indicated in Fig. 13(b). That is, it became obvious that 10 wt% of the silane coupling agent was included before washing, and 1.7 wt% of the silane coupling agent was included after washing. It was found that in comparative examples 3 to 6 which had not undergone the heat processing, the suppression of the increase in the internal resistance was reduce as described above because the silane coupling agent had dissolved in the solvent.

When the amount of the silane coupling agent relative to the entire amount of the lithium titanate particle group was 1.7 wt%, the amount of Si element included in the lithium titanate particle group was 0.3 wt% by conversion. Therefore, from the result indicated in Fig. 13, by adding 10 wt% of the silane coupling agent, the lithium titanate particle group including Si element in the ratio of 0.3 wt% can be produced when the heat processing was not performed.

### (Si Amount in Examples)

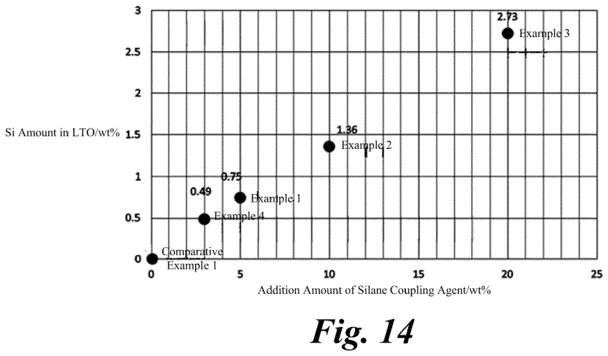

The amount of Si element remaining in the lithium titanate particle group of examples 1 to 4 and comparative example 1 was measured. As the quantification method of Si element, an alkali melting method was used. That is, the lithium titanate particle group of examples 1 to 4 and comparative example 1, and a flux were supplied into a platinum crucible and were melted by heating, and acid was further added thereto to dissolve the lithium titanate particle group of examples 1 to 4 and comparative example 1. Then, the Si amount was quantified by ICP-AES (Inductively Coupled Plasma Atomic Emission Spectroscopy). The result is indicated in Fig. 14. Fig. 14 is a graph indicating a relationship between the addition amount of the silane coupling amount and the amount of Si element included in the lithium titanate particle group.

As illustrated in Fig. 14, when 10 wt% of the silane coupling agent was mixed and heat processing was performed after the mixing process, the amount of Si element remaining in the lithium titanate particle group was 1.36 wt%. In example 4 in which the silane coupling agent was mixed in the same amount but the heat processing after the mixing process was not performed, since the amount of Si element remaining in the lithium titanate particle group was 0.3 wt% based on the result indicated in Fig. 9, it can be found that the Si-containing amount dramatically increased. Furthermore, it was found that when 3 wt% or more of the silane coupling agent was added, Si element remains more than comparative example 4 by the heat processing after the mixing process.

Furthermore, by combining the results indicated in Fig. 10 and Fig. 14, it was found that by adding 3 wt% to 20 wt# of the silane coupling agent and performing heat processing after the mixing process as examples 1 to 4, the lithium titanate particle group containing 0.4 wt% or more and 3.0 wt% or less of Si element could be produced, and according to this lithium titanate particle group, the increase in the internal resistance could be suppressed excellently. In addition, by combining the results indicated in Fig. 7 and Fig. 14, it was found that by adding 3 wt% to 10 wt# of the silane coupling agent and performing heat processing after the mixing process as examples 1, 2 and 4, the lithium titanate particle group containing 0.4 wt% or more and 1.4 wt% or less of Si element could be produced, and according to this lithium titanate particle group, the initial internal resistance could be suppressed excellently.

### (Si in Examples)

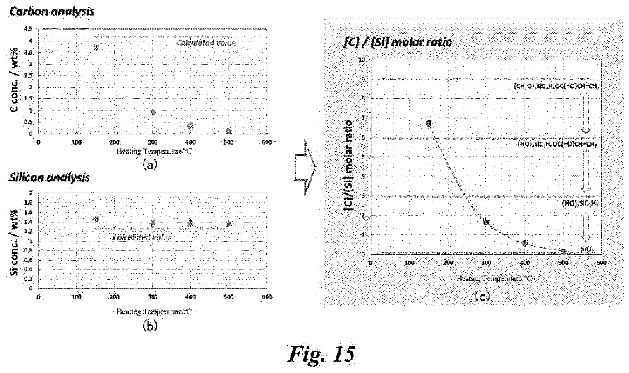

Next, in examples 1 to 4 in which the heat processing was performed, states exhibited on the surface of the lithium titanate particle group by the silane coupling agent was investigated. In detail, in order to observe the reaction of the silane coupling agent during the heat processing, the silane coupling agent of (CH₃O)₃SiC₃H₆OCOCH=CH₂ was heated to perform element analysis. In detail, the aggregate in which the lithium titanate particle group and the silane coupling agent (10 wt%) was mixed was dried for 12 hours at 150 °C. After the drying, the heat processing at 300 °C to 500 °C was performed. The carbon weight measurement using carbon analyzer was performed to the powder after the heat processing. Fig. 15(a) is a graph indicating a carbon concentration (wt%) of the silane coupling agent at each heating temperature, and Fig. 15(b) is a graph indicating a silicon concentration(wt%) of the silane coupling agent at each heating temperature. Furthermore, Fig. 15(c) is a graph indicating a ratio of carbon/silicon at each heating temperature.

As it is apparent from Fig. 15(a), the carbon amount of the silane coupling agent decreased along with the rise in the heating temperature. The carbon amount significantly decreased at the heating temperature of 300 °C, and the carbon almost disappeared at 400 °C. On the other hand, as it is apparent from Fig. 15(a), the silicon amount of the silane coupling agent exhibited an almost constant value regardless of the heating temperature.

As apparent from the graph of carbon/silicon ratio of Fig. 15(a) created based on these results, carbon in the silane coupling agent disappeared by the heating process, and it was assumed that the silane coupling agent became extremely similar to silicon oxide. That is, it was considered that by heating the silane coupling agent at 300 °C to 600 °C, the coating layer of silicon oxide, not the silane coupling agent, would be formed on the surface of the metal compound particle group.

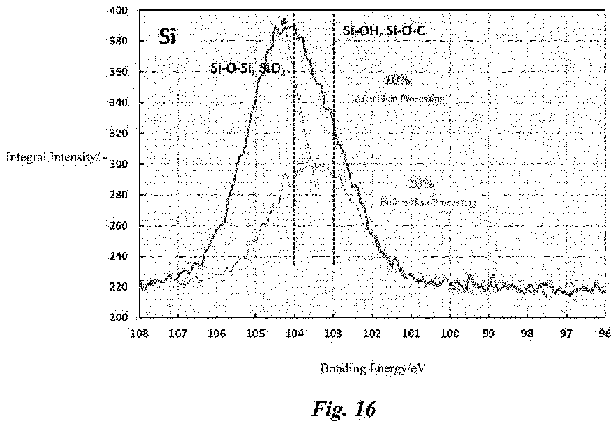

Next, X-ray photoelectron spectroscopy analysis was performed on the lithium titanate particle group in which 10 wt% of silane coupling agent was mixed. Fig. 16 is a graph indicating a result of X-ray photoelectron spectroscopy of the lithium titanate particle group before and after the heat processing. The bonding energy 103 eV indicated that the functional groups constituted were Si-OH and Si-O. Furthermore, the bonding energy 104 eV indicated that the functional groups constituted were Si-O-Si and SiO₂.

As apparent from Fig. 16, the spectrum of the lithium titanate particle group before the heat processing had peak at the middle point between 103 eV and 104 eV. Meanwhile, the peak of the lithium titanate particle group after the heat processing shifted near 104 eV. That is, although it was considered that the lithium titanate particle group after the heat processing included SiO and Si, it was found that the lithium titanate particle group after the heat processing had the peak very similar to SiO₂.

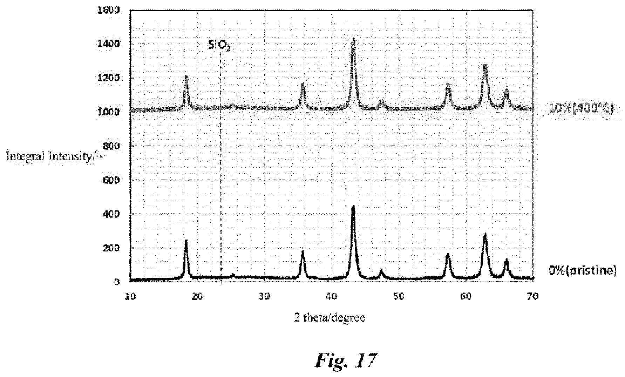

Next, Fig. 17 indicates the result of X-ray diffraction analysis of the lithium titanate particle group after the heat processing. As indicated by the dotted line in the figure, SiO₂ had the peak near 24 degrees. However, in the spectrum of the lithium titanate particle group after the heat processing, the peak indicating SiO₂ did not appear. This is because the peak of SiO₂ would be detected near 24 degrees by the X-ray diffraction analysis when the silicon oxide is crystalline. That is, since the peak very similar to SiO₂ was observed in the X-ray photoelectron spectroscopy analysis, and the peak indicating SiO₂ was not observed in the X-ray diffraction analysis, it was found that the silicon oxide included in the coating layer was amorphous.

### (Solid ¹H-NMR)

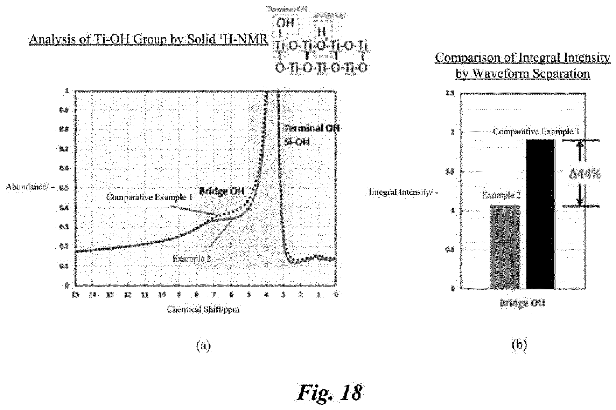

Fig. 18 (a) indicates the measurement data of solid ¹H-NMR of the lithium titanate particle group of example 2 and comparative example 2. The measurement was performed using a nuclear magnetic resonance analyzing device (JNM-ECA600 available from JOEL Ltd.). The peak present at 5 ppm to 8 ppm indicates a surface hydroxyl group (bridge OH) of the lithium titanate particle group.

Fig. 18(b) indicates the calculation result of the integral intensity of the peak present at 5 ppm to 8 ppm using waveform separation software. As apparent from Fig. 18 (b), it was found that the integral intensity of the lithium titanate particle group in example 2 decreased about 44% compared to the integral intensity of the lithium titanate particle group of comparative example 1. That is, it was indicated that the peak of the hydroxyl group (bridge OH) present on the surface of the lithium titanate particle group in example 2 decreased the attachment of silicon compound. In other word, example 2 is an example in which 44% of the surface of the lithium titanate particle group of comparative example 1, which was not covered by silicon oxide, was covered by silicon oxide.

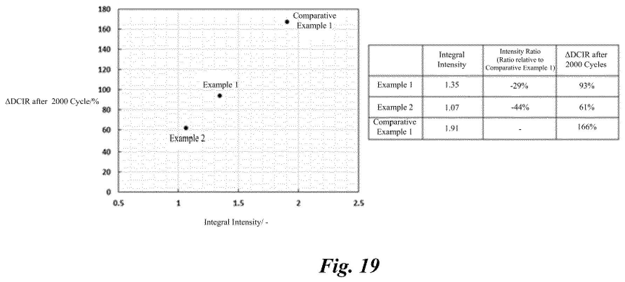

Next, Fig. 19 indicates a result of measuring the increase rate of the initial internal resistance of the lithium-ion secondary battery produced by using the lithium titanate particle group of example 2 and comparative example 1 after 2000 cycles. In both example 1 in which the reduction rate of the integral intensity was 29% and example 2 in which the reduction rate of the integral intensity was 44%, the result was excellent and the increase rate of the internal resistance after 2000 cycles were suppressed compared to the lithium-ion battery of comparative example 1. It was considered that the silicon oxide covering the surface of the lithium titanate particle group suppressed the production of the deposit on the negative electrode. It is desirable that the reduction rate of the integral intensity of the lithium titanate particle group is 25% or more from the viewpoint of suppressing the increase in the internal resistance.

### REFERENCE SIGN

- A:: metal compound particle group
- C:: coating layer
- 1:: primary particle
- 2:: gap

## Claims

1. A metal compound particle group having a 3D network structure in which metal compound particles are linked, the metal compound particle group comprising:
a coating layer including silicon oxide is formed on a part of the metal compound particle group.

2. The metal compound particle group according to claim 1, wherein the coating layer including silicon oxide is formed on at least a part of a surface of the metal compound particle group.

3. The metal compound particle group according to claim 1 or 2, wherein Si element is included in an amount of 0.4 wt% or more and 3.0 wt% or less relative to all metal compound particle group.

4. The metal compound particle group according to any one of claims 1 to 3, wherein:
a gap exists in the 3D network structure, and
the coating layer including silicon oxide is formed on the surface of the metal compound particle defining the gap.

5. The metal compound particle group according to any one of claims 1 to 4, wherein the coating layer including silicon oxide is an amorphous silicon oxide.

6. The metal compound particle group according to any one of claims 1 to 5, wherein a pore volume change rate calculated from a pore distribution of the metal compound particle group measured by a nitrogen gas adsorption measurement method is more than 0.008 dVₚ/drₚ relative to the pore diameter of 10 nm or less.

7. The metal compound particle group according to any one of claims 1 to 6, wherein a reduction rate of an integrated intensity is 25% or more relative to the metal compound particle group on which the coating layer including silicon oxide is not formed.

8. The metal compound particle group according to any one of claims 1 to 7, wherein the metal compound particle is lithium titanate.

9. An electrode for a power storge device including the metal compound particle group according to any one of claims 1 to 8.

10. The power storage device comprising:
an element which including a negative electrode that is the electrode for the power storge device according to claim 9, and a positive electrode; and
an electrolytic solution impregnated in the element,
wherein the electrolytic solution includes a fluorine-containing compound.

11. A method for producing the metal compound particle group comprising:
a mixing process of mixing the metal compound particle group that is a basis and a source material of silicon oxide, and
a heating process of heating a powder obtained by the mixing process at a temperature of 300 °C to 600 °C.

12. The method for producing the metal compound particle group according to claim 11, wherein the source material of silicon oxide is mixed in a ratio of 1 wt% to 20 wt% relative to a weight of the metal compound particle group that is the basis.

13. The method for producing the metal compound particle group according to claim 12, wherein the source material of silicon oxide is mixed in a ratio of 3 wt% to 20 wt% relative to a weight of the metal compound particle group that is the basis.

14. The method for producing the metal compound particle group according to any one of claims 11 to 13, wherein in the mixing process, one type or two types or more alkaline compound is mixed.

15. The method for producing the metal compound particle group according to any one of claims 11 to 13, further comprising, before the mixing process, a pre-processing process of pre-processing the metal compound particle group that is the basis with alkaline compound.

16. The method for producing the metal compound particle group according to claim 14 or 15, wherein the alkaline compound is hydroxide, acetate, sulfate, carbonate, nitrate, and chloride of alkali metal or alkali earth metal, and inorganic alkaline agent or organic alkaline agent.
